# EUROPEAN PATENT APPLICATION

(11) **EP 0 915 620 A1**
(43) Date of publication of application: **12.05.1999**
(21) Application number: 98121005.7
(22) Date of filing: 05.11.1998
(51) Int. Cl.: H04N 5/913

(54) **Method and apparatus for preventing unauthorized copy of data recorded on recording medium**

(30) Priority: 07.11.1997 JP 306104/97
(71) Applicant: NEC CORPORATION, Tokyo (JP)
(72) Inventor: Shimada, Michio c/o NEC Corporation, Tokyo (JP)
(74) Representative: Glawe, Delfs, Moll & Partner

(57) **Abstract**

A method for preventing an illegal copy by burying a copyright information in an audio or video signal according to an electronic watermarking is sometimes ineffective for personnel who perform illegal copying. In the present invention, when an audio or video signal is reproduced by a reproducing device, noise is buried in the reproduced audio or video signal as an electronic watermark so that the reproducing device outputs the audio or video signal with the noise. When the reproduced audio or video signal in which the noise is buried is copied, entropy of the reproduced audio or video signal with the noise is increased compared with an original audio or video signal and the cost of illegal copy thereof is increased.

## Description

### CROSS REFERENCE TO RELATED APPLICATION

The present invention claims priority from Japanese Patent Application No. 9-306104 filed September 7, 1997, the contents of which are incorporated herein by reference.

### BACKGROUND OF THE INVENTION

### 1. Field of the Invention

The present invention relates to a method and apparatus for preventing unauthorized copy of a recorded data by an audio and/or video signal recording/reproducing device. Although a signal to be regarded in the present invention is an audio signal, a video signal or a combination of an audio signal and a video signal. Therefore, the audio and/or video signal will be referred to as "audio/video" signal in the following description.

### 2. Description of Related Art

A technique for inserting or burying an extra data in sound and/or picture and retrieving the buried data from the sound and/or picture in such a way that an audience and/or watchers are unaware of the extra data has been known. Such technique is called as "steganography" or "information hiding". Recently, this technique is utilized to protect copyrights by burying names of authors, etc., in audio/video signals. In such case, this technique is called as "electronic watermarking". Since, with the recent development of the digital signal recording/reproducing device, the quality of signal obtained by copying an audio/video signal which has been broadcast or recorded as digital signal is not degraded, the possibility of copyright infringement due to unauthorized copy of such audio/video signal is having been increased. In order to protect such copyrights against infringement, it has been considered to prevent unauthorized or illegal copy by burying data such as names of authors, etc., in digital signals.

The present invention relates to the above mentioned technique and, in the following description, the burying of data in sound or picture will be referred to as "electronic watermark coding" and the retrieving of the buried data from the sound or picture will be referred to as "electronic watermark decoding".

Incidentally, the electronic watermark coding method and the electronic watermark decoding method are described in detail in, for example, Kashio Matsui, "Video Signal Ciphering - Methods and Applications", Morikita Publishing Co., 1993.

Japanese Patent Application Laid-open No. Hei 5-236424 discloses a technique for preventing a video signal from being copied without authorization by burying electronic watermark in the video signal. According to the disclosed technique, data is buried by replacing signal portions of a video signal which are in regions in which magnitudes thereof are larger or smaller than a set value by other signals or by passing them as they are.

However, there is a problem in the technique using the conventional electronic watermarking that the copyright protection is insufficient.

That is, it is usual that personnel who want to obtain profit by unauthorized copies produce recording media without authorization and sell them under the pretext of authorized copies. Therefore, when "name of author buried in a audio/video signal by the electronic watermarking" is coincident with "name of author written on a package of the medium which is a copy produced without authorization of the author", the "name of author buried in a audio/video signal by the electronic watermarking" can not be used as a reference for judging whether or not the copy is unauthorized copy. Rather, usual customers who do not know the principle of the electronic watermarking and who look at the name of "the copyright proprietor buried in the audio/video signal by the electronic watermarking" on the package of the medium after reproduction of the audio/video signal from the medium may believe that it is the authorized copy even if they initially doubt the legality thereof. In such case, the electronic watermarking may be an inverse effect in protecting copyright.

In a case where unauthorized copies are exchanged between friends or families, there is another problem that the possibility of third parties to know the fact of unauthorized copying is small. Further, since these people are substantially unconscious of the illegal copying, the number of illegal copies may be increased with popularization of a large capacity digital audio/video recording/reproducing device with which the copying operation is facilitated. Further, since a copied audio/video signal is not degraded when the copying is performed in the digital audio/video signal recording/reproducing device, there may be a case where the copied audio/video signal is dubbed again and again illegally and the unauthorized copies are distributed widely.

The technique disclosed in the previously mentioned Japanese Patent Application Laid-open No. Hei 5-236424 is superior in that data can be buried in the video signal without visual degradation of the video portion. However, the processing for extracting a feature region of the picture and converting a signal in that region may become complicated and a circuit construction therefor may also be complicated.

### SUMMARY OF THE INVENTION

An object of the present invention is to provide a method and an apparatus for preventing illegal copying by not merely burying a copyright information by electronic watermarking but burying an electronic watermark which causes a cost of illegal copying to be increased in a data and giving a randomness to the data.

According to a first aspect of the present invention, a method for preventing illegal copying is featured by that noise is buried in a reproduced audio signal or a reproduced video signal as an electronic watermark, the noise having such magnitude that degradation of tone quality of the reproduced audio signal or picture quality of the reproduced video signal, which is caused by the noise, can not be sensed by a listener or a viewer thereof.

According to a second aspect of the present invention, an apparatus for preventing illegal copying is featured by comprising decoder means for decoding audio signal or a video signal, noise generation means and electronic watermark coding means for burying the noise output from the noise generator means in the audio signal or the video signal output from the decoding means as the electronic watermark.

This illegal copying preventing apparatus is incorporated in an audio/video signal recording/reproducing device and, when the audio/video signal is output or the audio/video signal is recorded, the audio/video signal having the noise buried therein is reproduced/recorded.

Since, according to the method and apparatus of the present invention, the viewer and/or listener can sense substantially no degradation of tone quality and/or picture quality of the audio/video signal reproduced from a legally recorded recording medium, there is no problem on the viewer and/or listener side. On the other hand, when the viewer and/or listener views and/or listens an audio/video signal reproduced from an illegally copied medium, the degradation of tone quality and/or picture quality becomes large since the noise is added to the audio/video signal every time the illegally copied medium is reproduced or copied. Therefore, when the illegally copied medium is reproduced, the sound/picture in which noise whose amount exceeds a tolerable limit is buried is hardly heard or viewed, so that the illegal copy can be restricted.

Further, when an illegal copy is performed by utilizing the audio/video reproducing/recording device, data illegally copied becomes longer than an original data since an amount of data is increased by an amount corresponding to noise buried therein. Therefore, if the length of the original data is so long that it can be barely recorded on a medium of a certain capacity, it requires a medium having capacity which is twice the certain capacity to record an illegally copied data, causing the cost of illegal copy to be increased. This is also effective in preventing the illegal copying.

According to a third aspect of the present invention, a method for preventing illegal copying comprises the steps of burying an illegal copy prevention control signal in an audio/video signal and selecting a reproduced output dependently upon existence or absence of the illegal copy prevention control signal therein. That is, the method comprises the steps of burying an illegal copy prevention control signal for instructing a burying of noise in an audio signal or a video signal as an electronic watermark when the audio/video signal is recorded/reproduced, determining whether or not the illegal copy prevention control signal exists in the audio signal or the video signal decoded when the audio/video signal is recorded or reproduced and, when the illegal copy prevention control signal is detected, burying noise having such magnitude that a viewer or a listener is hardly aware of degradation of tone quality or picture quality caused thereby in the audio/video signal as an electronic watermark when the audio/video signal is reproduced or recorded.

According to a fourth aspect of the present invention, an illegal copy prevention device comprises decoding means for extracting an illegal copy prevention control signal for instructing a burying of noise in an audio signal or a video signal as an electronic watermark when the audio/video signal is recorded/reproduced, comparing means for comparing the illegal copy prevention control signal extracted by the decoding means with an illegal copy prevention control signal preliminarily given to the illegal copy prevention device, noise generating means, electronic watermark coding means for burying noise output from the noise generating means and having such magnitude that a viewer or a listener is hardly aware of degradation of tone quality or picture quality caused thereby in the input audio/video signal as an electronic watermark and selection means for providing an output of the electronic watermark coding means when the comparing means detects a coincidence of the illegal copy prevention control signals and providing the input audio/video signal when the comparing means detects an incoincidence of the illegal copy prevention control signals.

It is possible to incorporate this illegal copy prevention device in an audio/video signal recording/reproducing device in which the illegal copy prevention control signal is set in the audio/video signal recording/reproducing device such that a user of the latter device can not change the illegal copy prevention control signal therein and input an audio and/or video signal in which the illegal copy prevention control signal is preliminarily buried as an electronic watermark to the audio/video signal recording/reproducing device.

In the third and fourth aspects of the present invention, the illegal copy prevention control signal is buried in the audio/video signal to determine whether or not a copy prevention function is activated to thereby control the copy prevention function in the recording/reproducing device. Since, when the illegal copy prevention control signal is buried in an audio/video signal, the processing for burying noise is further performed, degradation of the tone quality and/or picture quality of the reproduced audio/video signal is increased to an extent that the viewer or the listener is aware of it and the viewer or the listener can know that the original audio/video signal was copied illegally. If the degradation of the tone quality or the picture quality becomes large to the extent that the viewer or the listener is aware of it by burying noise during a legal copying, it is possible to prevent the tone quality and/or picture quality from being degraded by interrupting the burying or addition of the illegal copy prevention control signal.

### BRIEF DESCRIPTION OF THE DRAWINGS

Now, embodiments of the present invention will be described with reference to the accompanying drawings, in which:
Fig. 1 is a functional block diagram showing a basic construction of a first embodiment of the present invention; and
Fig. 2 is a functional block diagram showing a basic construction of a second embodiment of the present invention.

### DETAILED DESCRIPTION OF THE PREFERRED EMBODIMENTS

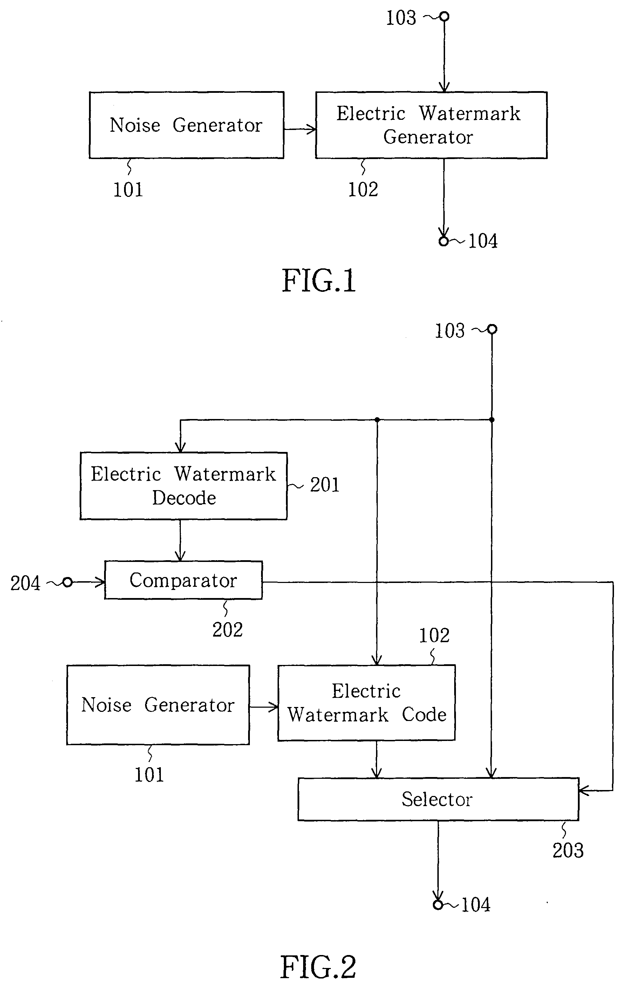

A first embodiment will be described with reference to Fig. 1 which is a block diagram showing a basic construction of an illegal copy prevention device of the present invention. In Fig. 1, the illegal copy prevention device comprises a noise generator 101 for generating noise and an electronic watermark coder 102 for burying noise generated by the noise generator 101 in an audio/video signal supplied from an input terminal 103 as an electronic watermark and providing a resultant signal from an output terminal 104. The noise generator 101 may be any of known noise generators such as random number generators and white noise generators. The electronic watermark coder 102 may be any conventional electronic watermark coder for burying an electronic watermark in a data. Magnitude of the noise generated is predetermined and magnitude (amplitude) of the noise buried is determined such that a viewer and/or a listener is unaware of degradation of tone quality or picture quality caused by the noise. The illegal copy prevention device is provided in a sound reproducing device or a picture reproducing device, or a sound recording/reproducing device or a picture recording/reproducing device. In this description, these devices will be referred to as an audio/video reproducing device or an audio/video signal recording/reproducing device, generally.

Now, a preventing or restricting function of the illegal copy prevention device shown in Fig. 1 for preventing or restricting illegal copy of audio/video signal will be described.

First, when an audio/video signal is to be output from an audio/video signal reproducing device, the illegal copy prevention device shown in Fig. 1 is preliminarily incorporated in the audio/video signal reproducing device and the audio/video signal reproduced by the audio/video signal reproducing device is supplied to the input terminal 103 of the illegal copy prevention device. The illegal copy prevention device buries noise having such magnitude that a viewer and/or a listener is unaware of degradation of tone quality or picture quality caused by the noise in the reproduced audio/video signal and outputs the audio/video signal buried with noise externally through the output terminal 104. In a case where the audio/video signal is to be copied (recorded) within the audio/video signal recording/reproducing device, the illegal copy prevention device is preliminarily incorporated in the audio/video signal recording/reproducing device and the audio/video signal reproduced by the audio/video signal recording/reproducing device is supplied to the input terminal 103 of the illegal copy prevention device. The illegal copy prevention device buries noise having such magnitude that a viewer and/or a listener is unaware of degradation of tone quality or picture quality caused by the noise in the reproduced audio/video signal and outputs the audio/video signal buried with noise through the output terminal 104, and the audio/video signal recording/reproducing device copies (records) the signal output from the output terminal 104.

In this manner, the reproduced audio/video signal buried with noise having such magnitude that a viewer and/or a listener is unaware of degradation of tone quality or picture quality caused by the noise is output from the output terminal 104. A television receiver or a video recorder, etc., is connected to the output terminal 104. When the output at the output terminal 104 is to be viewed and/or listened by a viewer or listener directly, the viewer or listener can view and/or listen without any difficulty. However, when the output signal at the output terminal 104 is illegally copied, noise is further superimposed on the illegally copied audio/video signal and, when the illegally copied audio/video signal is reproduced, tone quality and/or image quality thereof is further degraded to such extent that the viewer and/or listener can hardly view and/or listen, the merit of illegal copy being lost.

A second embodiment of the present invention will be described with reference to Fig. 2 which is a functional block diagram showing a basic construction of the illegal copy prevention device according to the second embodiment of the present invention. In the second embodiment, the copy preventing function of the audio/video recording/reproducing device is controlled by using an illegal copy prevention control signal.

The illegal copy prevention device shown in Fig. 2 is incorporated in the audio/video recording/reproducing device and comprises an electronic watermark decoder 201 for extracting an illegal copy prevention control signal for instructing a burying of noise in an audio and/or video signal input from the input terminal 103 as an electronic watermark when the audio/video signal is recorded/reproduced, a comparator 202 for comparing the illegal copy prevention control signal extracted by the electronic watermark decoder with an illegal copy prevention control signal preliminarily given to the illegal copy prevention device, a noise generator 101 for generating noise, an electronic watermark coder 102 for burying noise output from the noise generator 101 and having such magnitude that a viewer or a listener is hardly aware of degradation of tone quality or picture quality caused thereby in the input audio/video signal as an electronic watermark and a selector 203 for providing an output of the electronic watermark coder 102 when the comparator 202 detects a coincidence of the illegal copy prevention control signals and providing the audio/video signal input to the input terminal 103 when the comparator 202 detects an incoincidence of the illegal copy prevention control signals.

An operation of the illegal copy prevention device according to the second embodiment of the present invention will be described.

The electronic watermark decoder 201 restores the electronic watermark contained in the audio/video signal supplied from the input terminal 103 and supplies the restored electronic watermark to the comparator 202. The comparator 202 compares the illegal copy prevention control signal supplied to an input terminal 204 with the electronic watermark and outputs a result of comparison. The consistence of the illegal copy prevention control signal extracted as the electronic watermark coincides with the illegal copy prevention control signal preliminarily given to the illegal copy prevention device is represented by "1" and the inconsistence therebetween is represented by "0". The noise generator 101 generates noise and supplies the noise to the electronic watermark coder 102. The electronic watermark coder 102 buries the noise having such magnitude that a viewer or a listener is hardly aware of degradation of tone quality or picture quality caused thereby in the input audio/video signal supplied from the input terminal 103 as an electronic watermark. The selector 203 selects the output of the electronic watermark coder 102 when the output of the comparator 202 is "1" (when the illegal copy prevention control signal extracted from the electronic watermark is consistent with the illegal copy prevention control signal at the input terminal 204). On the other hand, the selector 203 selects the audio/video signal supplied from the input terminal 103. The output of the selector 203 is output from the output terminal 104.

The electronic watermarking system used in the electronic watermark decoder 201 is preferably different from that used in the electronic watermark coder 102. If these systems are the same, different parameters with which noise and the illegal copy prevention control signal can be identified when the electronic watermark coding operation is performed are used. This is to avoid a mixing up of the illegal copy prevention control signal and noise. Further, with this scheme, it is possible to extract the illegal copy prevention control signal from the audio/video signal buried with noise.

The illegal copy preventing operation of the audio/video signal by the illegal copy prevention device shown in Fig. 2 will be described.

First, the illegal copy prevention control signal for preventing illegal copy is preliminarily determined. This may be an image constructed with a train of letters such as "copy preventing function ON", a barcode or other illegal copy prevention control signal coded other coding methods. Manufacturers of audio/video signal recording/reproducing devices record the illegal copy prevention control signals in the audio/video signal recording/reproducing devices. It should be noted that such illegal copy prevention control signals are recorded in respective audio/video signal recording/reproducing devices such that the recorded control signals can not be changed by usual users thereof. Manufacturers and/or distributors of recording media on which audio/video signals such as movies, who want to prevent the media from being illegally copied, preliminarily bury the illegal copy prevention control signals in audio/video signals recorded on the recording media by using the electronic watermark coding. In this case, the electronic watermark coding of the illegal copy prevention control signal is assumed as being the electronic watermark coding corresponding to the electronic watermark decoder 201.

Since, in the first embodiment, noise is buried for every audio/video signal, there is a problem that noise is also buried in an audio/video signal produced by a user himself. In the second embodiment, however, noise is buried in only audio/video signal in which the illegal copy prevention control signal is buried and no noise is buried in audio/video signal produced originally by the user.

When, in the first and second embodiments, the audio/video signal is an analog signal, the electronic watermarking for analog signal is used and, when the audio/video signal is a digital signal, the electronic watermarking corresponding to the digital signal is used. Therefore, the present invention can be applied either analog audio/video signal or digital audio/video signal. Further, although, in the second embodiment, the burying of only the illegal copy prevention control signal has been described, it is possible to control the power of noise output from the noise generator by further burying an output power control signal for controlling the output power of the noise generator.

According to the present invention, the following effects can be obtained.

First, it is possible to prevent an illegally copied medium from being further illegally copied. In the present invention, noise is added to the audio/video signal every time when it is reproduced or copied. Therefore, if illegal copying is repeated, noise is accumulated and tone quality and/or image quality is substantially degraded, causing the commercial value of copy to be lost.

Secondly, there is substantially no sensible degradation of tone quality and/or image quality of an audio/video signal reproduced from a legally copied medium regardless of the fact that noise is added to the audio/video signal. This is because, in the present invention, noise is buried in the audio/video signal by means of the electronic watermarking in such a way that a viewer or a listener is hardly aware of degradation of tone quality or picture quality caused thereby.

Thirdly, according to the present invention, degradation of tone quality and/or image quality of the audio/video signal reproduced from an illegally copied recording medium is substantial because, although the electronic watermarking usually buries noise in the audio/video signal such that a viewer or a listener is hardly aware of degradation of tone quality or picture quality caused thereby, that is, in a case of video signal for example, buries a high frequency signal in a portion of the video signal which corresponds to a contour of an image or a low frequency signal in a flat portion thereof, such portions are important for human being in recognizing sound and/or image and, if the video signal is substantially modified by data (noise) buried therein excessively beyond a tolerable limit, the degradation of image is sensed strongly. It is difficult to remove randomly buried noise and, if it is not impossible to remove such noise from the audio/video signal, the cost therefor becomes considerable.

Fourthly, the digital audio/video signal recording/reproducing device according to the present invention, in which the audio/video signal is compressed according to the variable length data compression coding method in which the length of code varies according to a redundancy of a signal series and recorded, increases the cost of illegal copy for the following reason. That is, when noise is buried in an audio/video signal according to the electronic watermarking, a data amount of code obtained by data compression of the audio/video signal is increased correspondingly to an amount of the buried noise. Therefore, when such audio/video signal is illegally copied by utilizing the digital audio/video signal recording/reproducing device, the illegally copied data becomes longer than that of the original data. If the original data is long enough to be recorded on a full area of one recording medium, two recording media are required in order to record the illegally copied data and, thus, the cost of illegal copy is increased. If such illegally copied recording media are on sale under the pretense of a legal copy, one can easily look through from the difference in number of the recording media between the legal copy and the illegal copy and the sales of illegal copies become difficult. Of course, the present invention can not prevent illegal copies from being manufactured by physically copying a recording medium without using a normal digital audio/video signal recording/reproducing device and distributed. In a case where someone designs and manufactures a special copying device for illegally copying a legal copy, a large number of illegal copies manufactured thereby must be sold in order to collect a large amount of money invested therefor. Therefore, the possibility of detection of manufacturing and selling illegal copies by him becomes high and he shall be punished in all probability. Therefore, such physical manufacturing of illegal copies may be restricted.

Fifthly, the illegal copy prevention according to the present invention is also effective in a case where data recorded on a legal copy according to a certain recording system is illegally copied on a recording medium whose recording system is different from the certain recording system since the electronic watermarking is generally effective even when it is copied in other recording media having different recording systems. Therefore, when the present invention is applied to television video signal and even when the latter is illegally copied, there is no case where the illegally copied signal is continuously copied without limitation. It may be considered that, in order to cancel the illegal copy prevention function, a usual user records an audio/video signal reproduced by the digital audio/video signal recording/reproducing device on a tape by an existing analog type video tape recorder (VTR) having no illegal copy preventing function and records the audio/video signal reproduced from the tape by the VTR on the digital audio/video signal recording/reproducing device. However, it is impossible to cancel the illegal copy prevention function of the present invention by such procedures. This is because, although the present invention can not prevent illegal copy when an audio/video signal is recorded on a magnetic tape by an existing analog type video tape recorder (VTR) having no illegal copy preventing function and then the magnetic tape is illegally copied, the utilization of the analog type VTR is reduced with popularization of the digital audio/video recording/reproducing device and such illegal copying is reduced correspondingly.

Sixthly, according to the present invention, it is easily controllable whether or not the illegal copy preventing function of the audio/video signal recording/reproducing device because it depends upon whether or not the illegal copy prevention control signal is buried in the original audio/video signal by the electronic watermarking. Therefore, if the degradation of tone quality and/or image quality becomes as large as sensible by viewer and/or listener, it is possible to restrict the degradation by terminating the insertion of the illegal copy prevention control signal. Further, it is possible to regulate the tone and/or image quality by inserting an information for regulating the magnitude of noise as a control signal, if necessary.

## Claims

1. A method for preventing illegal copy of a reproduced audio signal or a reproduced video signal, comprising the step of inserting noise having a certain magnitude into the reproduced audio signal or the reproduced video signal as an electronic watermark, degradation of a tone quality or an image quality of the reproduced audio signal or the reproduced video signal caused by the noise being substantially insensible for a listener or a viewer.

2. An illegal copy prevention device for preventing illegal copy of an audio signal or a video signal, comprising:
decoder means for decoding the audio signal or the video signal;
noise generation means; and
electronic watermark coding means for burying the noise output from said noise generator means in the audio signal or the video signal output from said decoding means as an electronic watermark.

3. An audio or video signal recording/reproducing device comprising said illegal copy prevention device claimed in claim 2, for recording or reproducing an audio signal or a video signal in which the noise is buried.

4. An illegal copy prevention method comprising the steps of;
burying an illegal copy prevention control signal for instructing a burying of noise in an audio signal or a video signal as an electronic watermark when the audio/video signal is recorded/reproduced,
determining whether or not the illegal copy prevention control signal exists in the audio signal or the video signal decoded when the audio/video signal is recorded or reproduced and,
when the illegal copy prevention control signal is detected, burying noise having such magnitude that a viewer or a listener is hardly aware of degradation of tone quality or picture quality caused thereby in the audio/video signal as an electronic watermark when the audio/video signal is reproduced or recorded.

5. An illegal copy prevention device comprising:
decoder means for extracting an illegal copy prevention control signal for instructing an insertion of noise in an audio signal or a video signal as an electronic watermark when the audio signal or the video signal is recorded or reproduced;
comparing means for comparing the illegal copy prevention control signal extracted by said decoder means with an illegal copy prevention control signal preliminarily given to said illegal copy prevention device;
noise generating means;
electronic watermark coding means for burying noise output from said noise generating means and having such magnitude that a viewer or a listener is hardly aware of degradation of tone quality or image quality caused thereby in the input audio signal or the video signal as an electronic watermark; and
selection means for providing an output of said electronic watermark coding means when said comparing means detects a coincidence of the illegal copy prevention control signals and providing the input audio signal or the video signal when said comparing means detects an incoincidence of the illegal copy prevention control signals.

6. An audio or video signal recording/reproducing device comprising said illegal copy prevention device claimed in claim 5, for recording or reproducing an audio signal or a video signal, wherein
the illegal copy prevention control signal is set in said audio signal or the video signal recording/reproducing device such that a user of said audio signal or the video signal recording/reproducing device can not change the illegal copy prevention control signal therein and
an audio signal or video signal in which the illegal copy prevention control signal is preliminarily buried as an electronic watermark is input to said audio signal or the video signal recording/reproducing device.
